**Europäisches Patentamt**

**European Patent Office**

**Office européen des brevets**

(19)

(11) Veröffentlichungsnummer: **0 248 273 B1**

# (12) EUROPÄISCHE PATENTSCHRIFT

(45) Veröffentlichungstag der Patentschrift :
**17.07.91 Patentblatt 91/29**

(51) Int. Cl.$^5$ : **H02J 9/04**

(21) Anmeldenummer : **87107313.6**

(22) Anmeldetag : **20.05.87**

(54) **Notvorrichtung für Fernbedienungsempfänger.**

(30) Priorität : **02.06.86 FR 8607862**

(43) Veröffentlichungstag der Anmeldung :
**09.12.87 Patentblatt 87/50**

(45) Bekanntmachung des Hinweises auf die
Patenterteilung :
**17.07.91 Patentblatt 91/29**

(84) Benannte Vertragsstaaten :
**DE ES FR GB IT**

(56) Entgegenhaltungen :
**EP-A- 0 030 587**
**DE-A- 2 857 559**
**FR-A- 2 468 098**
**US-A- 3 953 769**

(73) Patentinhaber : **VALEO NEIMAN**
**12bis, rue Maurice Berteaux**
**F-78290 CROISSY-SUR-SEINE (FR)**

(72) Erfinder : **Lipschütz, Paul**
**12, rue Maurice Berteaux**
**F-78290 Croissy (FR)**

(74) Vertreter : **Cohausz & Florack Patentanwälte**
**Postfach 14 01 61 Schumannstrasse 97**
**W-4000 Düsseldorf 1 (DE)**

## Beschreibung

Die Erfindung bezieht sich auf einen Fernbedienungsempfänger, insbesondere für die Zentralverriegelung eines Kraftfahrzeuges, der durch eine Batterie 14 und bei Ausfall der Batterie durch ein wiederaufladbares Element 1 versorgt wird und eine Mehrzahl elektrischer Schalter 11, 11', 11'', 11''' zum Verriegeln oder Entriegeln betätigt, die von der Batterie 14 oder dem wiederaufladbaren Element 1 versorgt werden.

Derartige Fernbedienungsvorrichtungen werden z.B. zum Fernbetätigen von Zentralverriegelungen in Kraftfahrzeugen durch Übermittlung eines im Empfänger gelesenen Codes benutzt. Insbesondere bei Kraftfahrzeugen läßt sich eine solche Vorrichtung sehr bequem handhaben, doch benutzt man aus Furcht vor elektrischen Störungen (Entladen der Batterie) parallel zur Fernbedienung immer noch mechanische Schlösser, die den Preis der Anlage erhöhen und wegen der Anfälligkeit der Schlösser ihre Sicherheit stark herabsetzen. Aus der DE-2 857 559 ist zwar an sich bekannt, eine aufladbare Batterie für Notfälle anzuordnen, aber diese ist im Kraftfahrzeug von außen unzugänglich eingebaut.

Ziel der Erfindung ist es, einen vollständigen Verzicht auf mechanische Schlösser zu ermöglichen, und zwar dank einer Notvorrichtung, die bei Ausfall der elektrischen Anlage einsatzbereit ist.

Deshalb ist der erfindungsgemäße Empfänger dadurch gekennzeichnet, daß das Element 1 im Sitz 3 des Handgriffes einer Kraftfahrzeugtür 5 gleitend gegen die Wirkung einer Druckfeder 6 untergebracht ist, wobei dieser Sitz 3 einen Ausschalter 10 zum Umschalten des normalen Stromkreises 12 auf den Notstromkreis 13 umfaßt, der genannte Ausschalter 10 durch das Gleiten des Elementes 1 betätigt wird und im eingeschobenen Zustand das Element 1 von außen an die Versorgungsklemmen 8, 8' des Empfängers 16 und über diesen an mindestens einen 11 der Schalter 11, 11', 11'', 11''' angeschlossen ist.

Bei Ausfall der Batterie ermöglicht das Trockenelement die Versorgung des Empfängers, der nach Lesen des vom Sender übermittelten Codes die Versorgung mindestens eines Schalters durch das gleiche Element ermöglicht, so daß diese Anlage entriegelt werden kann.

Die Erfindung wird gut verständlich beim Lesen der folgenden Beschreibung unter Bezugnahme auf die beigeheftete Zeichnung, in der

Fig. 1     eine Schnittansicht einer Notversorgungsvorrichtung nach einem Ausführungsbeispiel der Erfindung ist ;

Fig. 2     ist ein elektrisches Schaltbild der Zentralverriegelung bei Normalbetrieb, und

Fig. 3     ist das Schaltbild der Fig. 2 bei Notbetrieb.

Im beschriebenen Beispiel ist ein Trocken- oder wiederaufladbares Element 1, das der Notversorgung dient, in einer Hülse 2 untergebracht, die im Sitz 3 des Handgriffes einer Kraftfahrzeugtür 5 beweglich ist. Der Sitz 3 schließt nach außen durch einen abnehmbaren, dichtschließenden Deckel 4 ab. Das Ganze ist in der in der Tür 5 des Fahrzeuges vorhandenen Vertiefung befestigt. Eine Feder 6 hält die Pole 7, 7' des Elementes 1 von den Kontakten 8, 8' der Notversorgung des Empfängers 16 fern. In der Hülse 2 ist ein Ausschalter 10 untergebracht.

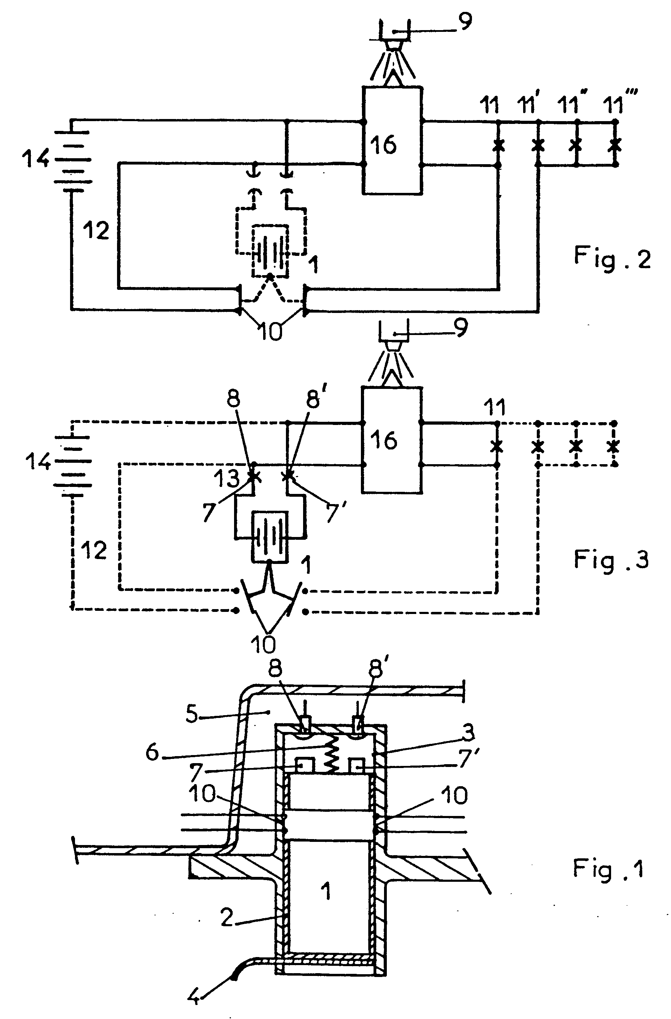

Bei Normalbetrieb (Fig. 2) wird der Empfänger 16, da das Element 1 nicht gegen die Kraft der Feder 6 eingedrückt worden ist, unmittelbar durch die Batterie 14 versorgt, und wenn dieser vom Sender 9 einen Befehl nach dem vereinbarten Code erhält, ermöglicht er die Versorgung der Schalter 11, 11', 11'', 11''' durch die Batterie 14 über den Stromkreis 12 (in durchgezogenen Linien dargestellt).

Fällt die Batterie 14 aus, wird nach Eindrücken des Elementes 1 gegen die Wirkung der Feder 6 von der Außenseite des Fahrzeuges aus der Empfänger 16 unmittelbar durch das Element 1 versorgt. Durch das Eindrücken des Elementes 1 wird der Aussschalter 10 betätigt, der den Stromkreis 12 öffnet und einen Stromkreis 13 schließt (in Fig. 3 in durchgezogenen Linien dargestellt), wodurch der einzige Schalter 11 vom Element 1 versorgt werden kann, wenn die vom Sender 9 ausgestrahlte Mitteilung richtig ist.

## Patentansprüche

1. Fernbedienungsempfänger (16) insbesondere für die Zentralverriegelung eines Kraftfahrzeuges, der durch eine Batterie (14) und bei Ausfall der Batterie durch ein wiederaufladbares Element (1) versorgt wird und eine Mehrzahl elektrischer Schalter (11, 11', 11'', 11''') zum Verriegeln oder Entriegeln betätigt, die von der Batterie (14) oder dem wiederaufladbaren Element (1) versorgt werden, **dadurch gekennzeichnet,** daß daß das Element (1) im Sitz (3) des Handgriffes einer Kraftfahrzeugtür (5) gleitend gegen die Wirkung einer Druckfeder (6) untergebracht ist, wobei dieser Sitz (3) einen Ausschalter (10) zum Umschalten des normalen Stromkreises (12) auf den Notstromkreis (13) umfaßt, der genannte Ausschalter (10) durch das Gleiten des Elementes (1)

betätigt wird und im eingeschobenen Zustand das Element (1) von außen an die Versorgungsklemmen (8, 8′) des Empfängers (16) und über diesen an mindestens einen (11) der Schalter (11, 11′, 11″, 11‴) angeschlossen ist.

2. Empfänger nach Anspruch 1, **dadurch gekennzeichnet**, daß der Sitz (3) nach außen durch einen abnehmbaren, dichtschließenden Deckel (4) abschließt.


## Claims

1. A remote control receiver (16) especially for the central locking of a motor vehicle, which receiver is supplied by a battery (14) and, in the case of failure of the battery, by a rechargeable element (1), and which operates a plurality of electrical switches (11, 11′, 11″, 11‴) for locking or unlocking supplied by the battery (14) or by the rechargeable element (1), characterized in that the rechargeable element (1) is disposed in a lodgement (3) of the handle of a door (5) of a motor vehicle such that it can slide against the action of a pressure spring (6), and this housing (3) comprises a circuit breaking switch (10) for switching from the normal current circuit (12) to the emergency current circuit (13), said circuit breaking switch (10) being actuated by the sliding of the element (1) ; and in the pushed-in state the element (1) is connected, from outside, to the supply terminals (8, 8′) of the receiver (16) and by means of this to at least one (11) of the switches (11, 11′, 11″, 11‴).

2. A receiver according to claim 1, characterized in that the housing (3) is closed towards the outside by means of a removable sealing cover (4).


## Revendications

1. Récepteur de télécommande (16), en particulier pour le verrouillage central d'un véhicule, qui est alimenté par une batterie (14) ou, en cas de défaillance de la batterie, par une pile rechargeable (1) et qui commande une pluralité d'interrupteurs (11, 11′, 11″, 11‴) pour le verrouillage ou le déverrouillage, qui sont alimentés par la batterie (14) ou par la pile rechargeable (1), caractérisé en ce que la pile (1) est placée coulissante à l'encontre de l'action d'un ressort (6), dans le logement (3) de la poignée d'une portière (5) de véhicule, lequel logement (3) contient un coupe-circuit (10) pour la commutation du circuit électrique normal (12) sur le circuit de secours (13), lequel coupe-circuit (10) est actionné par le coulissement de la pile (1) et, dans une position enfoncée, depuis l'extérieur, la pile (1) alimente les bornes de secours (8, 8′) du récepteur (16) et, à travers celui-ci, au moins un (11) des interrupteurs (11, 11′, 11″, 11‴).

2. Récepteur selon la revendication 1, caractérisé par le fait que ledit logement (3) est fermé vers l'extérieur par un opercule de fermeture étanche amovible (4).

Fig . 2

Fig . 3

Fig . 1